# EUROPEAN PATENT SPECIFICATION

(11) **EP 1 399 360 B1**
(45) Date of publication and mention of the grant of the patent: **17.08.2005**
(21) Application number: 01940937.4
(22) Date of filing: 28.06.2001
(51) Int. Cl.: B62M 27/00

(54) **PEDAL VEHICLE FOR LOCOMOTION ON SNOWY AND/OR ICY SURFACES**
TRETKURBELBETRIEBENES EISFAHRZEUG
VEHICULE A PEDALES PERMETTANT DE SE DEPLACER SUR DES SURFACES ENNEIGEES ET/OU VERGLACEES

(43) Date of publication of application: 24.03.2004
(73) Proprietor: Verda, Dario, 6982 Agno (CH)
(72) Inventor: Verda, Dario, 6982 Agno (CH)
(74) Representative: Fiammenghi-Domenighetti, Delfina
(86) International application number: PCT/IB2001/001183
(87) International publication number: WO 2003/002402

(56) References cited:
- US-A- 586 412
- US-A- 2 978 251
- US-A- 4 828 280

## Description

The present invention relates to pedal vehicles, and more particularly to those designed for locomotion on snowy and/or icy surfaces.

In the present state of the art a number of such vehicles have already been described, for example in patent US 3,915,468 (Hoareau) and in patent application FR 83 19885 (Vachoux), which move over the snow by the action of belts driven by pedals.

The present applicant has also already devised one of these vehicles, described in the patent application published under WO 96/16862. Document US 4 828 280 discloses a vehicle as in the preamble of claim 1.

The present applicant, has however found that vehicles of the abovementioned type have a number of limitations and certain drawbacks, the most important of which is the large amount of effort required to propel them.

Given the complex structure of these vehicles, furthermore, their weight, though considerable, is not great enough to be made use of when travelling downhill to reach good speeds, because the belts have a noticeable braking action.

To avoid all the drawbacks and limitations mentioned above, the inventor of the present invention has devised an innovative vehicle as in claim 1, having a central wheel driven by pedals and interposed between two ski skids, of which the front skid is integral with a directional handlebar, while the rear skid is located below and behind the saddle with which the vehicle is provided for the support of the rider.

The abovementioned wheel is fitted on its outer surface with means such as crampons, spikes or the like which ensure a good grip on snowy or icy surfaces, and is mounted on a moveable supporting structure, which can be moved manually by the rider so as to lift the wheel off the surface on which it rests. By so doing, the vehicle behaves during descents exactly like a pair of in-line skis, and can have appreciable speed.

When the rider wishes to stop the vehicle, he or she simply releases the said supporting structure, allowing the wheel to return again to the ground and slowing the wheel by a "back-peddling" braking device of known type, with which it is provided.

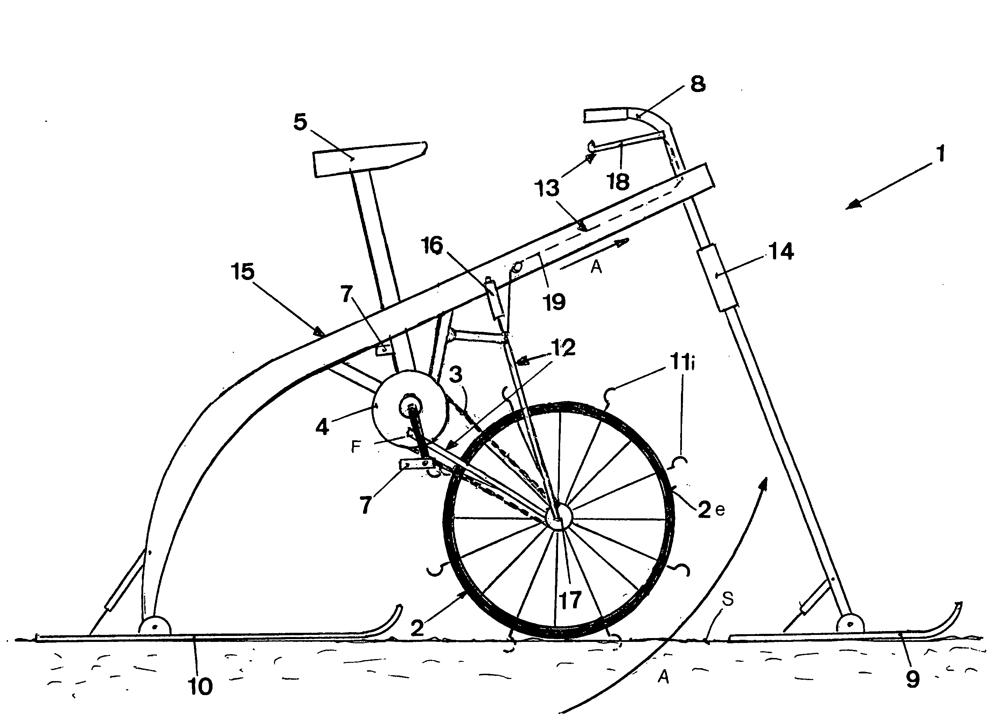

A more detailed description of a preferred illustrative embodiment of the vehicle of the invention will now be given, referring also to the appended figure, which shows the vehicle in side view.

In this figure a vehicle 1 according to the invention can be seen to comprise first of all a frame 15, to which are connected, substantially as in an ordinary bicycle, a saddle 5 for supporting the rider and a handlebar 8 which serves to modify the direction of travel.

In addition, the vehicle 1 comprises, also hinged to the said frame 15, a driving pulley 4 integral with two driving pedals 7. This pulley 4 is connected by flexible transmission means 3 to a wheel 2 located between two ski-type in-line snow skids 9, 10, of which the front skid 9 is integral with the abovementioned handlebar 8, and can be turned on a horizontal plane to control the direction of travel, while the rear skid 10 is fitted behind and below the said saddle 5. It should be pointed out that, in embodiments of the vehicle of the invention different from those under examination, the rear ski-type skid 10 can be replaced with two (or more) skids of similar type arranged parallel and side by side, giving the vehicle greater stability, but slightly limiting the maximum speed.

The said pulley 4 may preferably be toothed, and be connected by a transmission chain, as is usual in the cycling field, to a sprocket 17 coaxial with the wheel 2, and optionally with a speed change of a known type. If so, the sprocket 17 will have to be composed of a number of coaxial toothed rings or wheels of different diameters.

References thus far have been to a transmission chain, but there is no reason not to use, in certain cases, a toothed belt or other flexible means of connection having similar functions.

It should be pointed out that, in the illustrative embodiment in question, the said wheel 2 is positioned further forward in the direction of motion than the driving pulley 4, in contrast to the configuration of normal bicycles.

This enables the vehicle 1 to be built ergonomically, with the saddle 5 set at a suitable level, not too high off the surface S on which the said vehicle 1 is moving.

By turning the pedals 7, the rider turns the wheel 2 which, as it grips into the said surface S, propels the vehicle 1 forward as its slides on the said two in-line skids 9, 10.

Because the surface S is a snowy and/or icy surface, according to the invention a plurality of equidistant means (crampons, spikes or similar means) are fitted to or formed on the outer surface 2e of the wheel 2, that is on that surface thereof which is in contact with the ground, projecting radially therefrom, in order to give the wheel the desired grip on the said surface.

These means dig into the snow or ice and prevent the wheel 2 from skidding when turned by the pedals 7.

Connected to the said sprocket 17, or more generally to the spindle of the wheel 2, is a "back-peddling" braking device of known type (not shown): by moving the pedals in the opposite direction to that which would cause the vehicle 1 to travel forwards, its speed can be reduced when required.

In order to be able to benefit from downhill slopes and increase the speed of the vehicle 1 as required, the inventor hinges the wheel 2 on a supporting structure 12 which can rotate about the point F where it pivots on the said frame 15 so as to lift the wheel 2 off the surface S over which the vehicle is moving: in this way, the wheel 2 and its said projecting means 11i no longer interfere with the ground, and exert no action which could retard the motion of the vehicle 1, which therefore behaves like a sledge supported on the said in-line skids 9, 10.

In order to rotate the said supporting structure 12 as stated, a solution preferred by the inventor is to connect this structure to a flexible cable 19 which is pulled in the appropriate direction A to cause a rotation B of the said structure sufficient to lift the wheel 2 off the surface S of the ground.

The said flexible cable 19, of a type similar to that used to operate the brakes of a bicycle, can be pulled by operating a lever 18, also mounted on the handlebar 8 in exactly the same way as is usual for the levers of the handbrakes of a bicycle.

Afterwards, when the said lever 18 is released, the supporting structure 12 rotates in the opposite direction to that described above, assisted by its own weight, and the wheel 2 drops back onto the surface S to exert its function of traction or braking.

Naturally, in order to make the use of the vehicle 1 according to the invention more comfortable, and to prevent excessive shocks or jolts, the inventor fits shock absorbers 14, 16 between the handlebar 8 and the front skid 9, and between the said supporting structure 12 of the wheel 2 and the frame 15, respectively. Other shock absorbers can also be mounted between the rear skid or skids and the frame, as illustrated in the figure, between the frame and the saddle, etc.

It will be obvious that the example described does not exhaust the potential embodiments of a pedal vehicle according to the invention which are made available to a person skilled in the art by the teachings contained in the appended Claim 1.

## Claims

1. Vehicle (1) with pedals (7), for locomotion on snowy and/or icy surfaces (S), having a frame (15) connected to a saddle (5) and to a directional handlebar (8), and also having a driving pulley (4) driven by the said pedals (7), which vehicle comprises a wheel (2), driven via flexible transmission means (3) connected to the said driving pulley (4) and located between a front snow skid (9), connected to the said directional handlebar (8), and one or more rear snow skids (10) mounted below and behind the said saddle (5), projecting means (11i) being fitted to or formed on the outer surface (2e) of the said wheel (2) so as to exert a desired grip on the said snowy and/or icy surfaces (S) when the said wheel (2) is driven by the said pedals (7), **characterized in that** the said wheel (2) is positioned further forward in the direction of motion than the said driving pulley (4).

2. Vehicle according to Claim 1, in which the said projecting means that exert a desired grip on the snowy and/or icy surfaces (S) consist of a plurality of crampons (11i) projecting radially from the said outer surface (2e) of the wheel (2).

3. Vehicle according to one of the preceding claims, in which the said wheel (2) is provided with a back-pedalling braking system.

4. Vehicle according to one of the preceding claims, in which the said wheel (2) is hinged to a supporting structure (12) that is capable of rotating relative to a point (F) of the frame (15) on which it pivots.

5. Vehicle according to Claim 4, having hand-operated means (13) capable of rotating the said supporting structure (12) in such a way as to lift the wheel (2) off the snowy and/or icy surface (S) on which it rests.

6. Vehicle according to Claim 5, in which the said hand-operated means (13) for rotating the said supporting structure (12) consist of a lever (18) mounted on the handlebar (8) and connected by a flexible cable (19) to the said supporting structure (12).

7. Vehicle according to one of the preceding claims, in which a shock absorber (14) is interposed between the handlebar (8) and the front ski skid (9).

8. Vehicle according to one of the preceding claims, in which a shock absorber (16) is mounted between the said supporting structure (12) and the frame (15) on which it pivots.

9. Vehicle according to one of the preceding claims, in which the said driving pulley (4) is toothed, and the said flexible transmission means consist of a transmission chain (3) connecting it to a sprocket (17) integral with the said wheel (2).

## Patentansprüche

1. Fahrzeug (1) mit Tretkurbeln (7) zur Bewegung auf verschneiten und/oder vereisten Oberflächen (S), mit einem Rahmen (15), der mit einem Sattel (5) und einer Lenkstange (8) verbunden ist, und das außerdem eine Antriebsscheibe (4) besitzt, die durch die Tretkurbeln (7) angetrieben wird, wobei das Fahrzeug ein Rad (2) aufweist, das über eine flexible Transmissionseinrichtung (3) angetrieben wird, die an die Antriebsscheibe (4) angeschlossen ist, und das zwischen einer vorderseitigen Schnee-Gleitkufe (9), die an die Lenkstange (8) angeschlossen ist, und einer oder mehreren rückseitigen Schneegleitkufen (10), die unter und hinter dem Sattel (5) angebracht sind, lokalisiert ist, wobei vorstehende Einrichtungen (11i) an der Außenoberfläche (2e) des Rades (2) angebracht oder ausgebildet sind, um auf die verschneiten und/oder vereisten Oberflächen (S) eine gewünschte Griffigkeit auszuüben, wenn das Rad (2) durch die Tretkurbeln (7) angetrieben wird;
**dadurch gekennzeichnet,**
**dass** das Rad (2) in Bewegungsrichtung weiter vorne positioniert ist als die Antriebsscheibe (4).

2. Fahrzeug nach Anspruch 1, wobei die vorstehenden Einrichtungen, die auf die verschneiten und/oder vereisten Oberflächen eine gewünschte Griffigkeit ausüben, aus einer Vielzahl von Haken (11i) bestehen, die von der Außenoberfläche (2e) des Rades (2) radial wegstehen.

3. Fahrzeug nach einem der vorhergehenden Ansprüche, wobei das Rad (2) mit einem Rücktritt-Bremssystem ausgestattet ist.

4. Fahrzeug nach einem der vorhergehenden Ansprüche, wobei das Rad (2) an einer Haltestruktur (12) drehbar angebracht ist, die um eine Punkt (F) des Rahmens (15) schwenkbar ist.

5. Fahrzeug nach Anspruch 4, mit einer von Hand betätigbaren Einrichtung (13) zum Schwenken der Haltestruktur (12) derartig, dass das Rad (2) von der verschneiten und/oder vereisten Oberfläche (S), auf der es aufliegt, hochgehoben wird.

6. Fahrzeug nach Anspruch 5, wobei die von Hand betätigbare Einrichtung (13) zum Schwenken der Haltestruktur (12) einen Hebel (18) aufweist, der an der Lenkstange (8) angebracht und durch ein flexibles Kabel (19) mit der Haltestruktur (12) verbunden ist.

7. Fahrzeug nach einem der vorhergehenden Ansprüche, wobei zwischen der Lenkstange (8) und der vorderen skiförmigen Gleitkufe (9) ein Stoßdämpfer (14) eingefügt ist.

8. Fahrzeug nach einem der vorhergehenden Ansprüche, wobei zwischen der Haltestruktur (12) und dem Rahmen (15), an dem sie schwenkbar angebracht ist, ein Stoßdämpfer (16) angebracht ist.

9. Fahrzeug nach einem der vorhergehenden Ansprüche, wobei die Antriebsscheibe (4) gezahnt ist und die flexible Transmissionseinrichtung aus einer Transmissionskette (3) besteht, die die Antriebsscheibe mit einem Kettenzahnrad (17) verbindet, das mit dem Rad (2) integral ausgebildet ist.

## Revendications

1. Véhicule (1) muni de pédales (7), pour permettre de se déplacer sur des surfaces enneigées et/ou verglacées (S), comportant un cadre (15) relié à une selle (5) et à un guidon de direction (8), ainsi qu'une poulie d'entraînement (4) entraînée par lesdites pédales (7), véhicule qui comprend une roue (2) entraînée par l'intermédiaire d'un moyen de transmission flexible (3) relié par ladite poulie d'entraînement (4) et positionnée entre un patin à neige avant (9) relié audit guidon de direction (8), et un ou plusieurs patins à neige arrière (10) montés au-dessous et à l'arrière de ladite selle (5), des moyens saillants (11i) étant montés ou formés sur la surface extérieure (2e) de ladite roue (2) afin d'exercer une adhérence souhaitée sur lesdites surfaces enneigées et/ou verglacées (S) lorsque ladite roue (2) est entraînée par lesdites pédales (7), **caractérisé en ce que** ladite roue (2) est positionnée d'avantage vers l'avant dans la direction de déplacement que ladite poulie d'entraînement (4).

2. Véhicule selon la revendication 1, dans lequel lesdits moyens saillants qui exercent une adhérence souhaitée sur les surfaces enneigées et/ou verglacées (S) consistent en plusieurs crampons (11i) qui font saillie radialement sur ladite surface extérieure (2e) de la roue (2).

3. Véhicule selon la revendication 1 ou 2, dans lequel ladite roue (2) est équipée d'un système de freinage par rétropédalage.

4. Véhicule selon l'une quelconque des revendications précédentes, dans lequel ladite roue (2) est articulée sur une structure de support (12) capable de tourner par rapport à un point (F) du cadre (15) sur lequel elle pivote.

5. Véhicule selon la revendication 4, comportant des moyens manuels (13) capables de faire pivoter ladite structure de support (12) de façon à soulever la roue (2) à distance de la surface enneigée et/ou verglacée (S) sur laquelle elle repose.

6. Véhicule selon la revendication 5, dans lequel lesdits moyens manuels (13) destinés à faire pivoter ladite structure de support (12) consistent en un levier (18) monté sur le guidon (8) et relié par un câble flexible (19) à ladite structure de support (12).

7. Véhicule selon l'une quelconque des revendications précédentes, dans lequel un amortisseur de chocs (14) est interposé entre le guidon (8) et le patin de ski avant (9).

8. Véhicule selon l'une quelconque des revendications précédentes, dans lequel un amortisseur de chocs (16) est monté entre ladite structure de support (12) et le cadre (15) sur lequel celle-ci pivote.

9. Véhicule selon l'une quelconque des revendications précédentes, dans lequel ladite poulie d'entraînement (4) est dentée, et ledit moyen de transmission flexible consiste en une chaîne de transmission (3) qui relie celle-ci à une roue dentée (17) solidaire de ladite roue (2).
